# EUROPÄISCHE PATENTSCHRIFT

(11) **EP 3 717 321 B1**
(45) Veröffentlichungstag und Bekanntmachung des Hinweises auf die Patenterteilung: **15.09.2021**
(21) Anmeldenummer: 18812071.1
(22) Anmeldetag: 15.11.2018
(51) Int. Cl.: B60T 13/66

(54) **VERFAHREN ZUM BETREIBEN EINER BREMSANLAGE FÜR KRAFTFAHRZEUGE SOWIE BREMSANLAGE**
BRAKE SYSTEM FOR VEHICLES AND METHOD OF OPERATING IT
SYSTÈME DE FREINAGE POUR VÉHICULES ET PROCÉDÉ POUR OPÉRER LE MÊME

(30) Priorität: 01.12.2017 DE 102017221723
(43) Veröffentlichungstag der Anmeldung: 07.10.2020
(73) Patentinhaber: Continental Teves AG & Co. OHG, 60488 Frankfurt am Main (DE)
(72) Erfinder: BILLER, Harald, 60488 Frankfurt am Main (DE)
(74) Vertreter: Continental Corporation
(86) Internationale Anmeldenummer: PCT/EP2018/081385
(87) Internationale Veröffentlichungsnummer: WO 2019/105748

(56) Entgegenhaltungen:
- DE-A1-102011 081 240
- DE-A1-102012 219 390
- DE-A1-102013 203 594
- DE-A1-102016 200 614
- FR-A1- 2 958 605

## Beschreibung

Die Erfindung betrifft ein Verfahren zum Betreiben einer Bremsanlage für Kraftfahrzeuge, die einen mittels eines Bremspedals betätigbaren Hauptbremszylinder, eine elektrisch steuerbare Druckbereitstellungseinrichtung, einen, insbesondere unter Atmosphärendruck stehender, Druckmittelvorratsbehälter, aus dem der Hauptbremszylinder und die Druckbereitstellungseinrichtung mit Druckmittel versorgt werden, sowie mindestens zwei hydraulisch betätigbare Radbremsen und zumindest ein elektrisch betätigbares Einlassventil je Radbremse umfasst, wobei die Radbremsen wahlweise mittels des Hauptbremszylinders oder mittels der Druckbereitstellungseinrichtung betätigbar sind, sowie eine Bremsanlage für Kraftfahrzeuge gemäß dem Oberbegriff von Anspruch 11.

Aus dem Dokument FR 2958605 A1 ist eine Bremsanlage bekannt, die ein Bremsflüssigkeitsreservoir aufweist, welches mit einer Überwachungseinheit versehen ist. Sobald die Überwachungseinheit feststellt, dass der Flüssigkeitspegel um mehr als einen Schwellwert ansteigt, wird von einem Fehler, beispielsweise von einer Verdampfung der Flüssigkeit ausgegangen und es wird ein entsprechendes Fehlersignal ausgegeben.

Aus der DE 10 2012 219 390 A1 ist eine Bremsanlage für Kraftfahrzeuge bekannt, die in einer "Brake-by-wire"-Betriebsart betrieben werden kann, in der Radbremsen des Kraftfahrzeugs mit Druckmittel aus einer elektrisch steuerbaren Druckbereitstellungseinrichtung betätigt werden. Die Bremsanlage kann auch in einer Rückfallbetriebsart betrieben werden, in der die Radbremsen mit Druckmittel aus einem Hauptzylinder betrieben werden.

In einer solchen Bremsanlage können Leckagen auftreten, die so gering sind, dass sie nicht mittels einer Volumenmessung während des Betriebs in der Druckbereitstellungseinrichtung ermittelt und lokalisiert werden können.

Es ist damit Aufgabe der vorliegenden Erfindung, ein Verfahren zum Betrieb einer Bremsanlage bereitzustellen, mit welchem die Bremsanlage im Falle einer Leckage mit erhöhter Sicherheit betrieben wird.

Der Erfindung liegt der Gedanke zugrunde, dass die Radbremsen in mindestens eine erste Radbremsengruppe und eine zweite Radbremsengruppe eingeteilt werden. Der Druckvorratsbehälter wird bezüglich einer mögliche Leckage durch Bestimmung eines Pegels des Druckmittels in dem Druckmittelvorratsbehälter überwacht und bei Absinken des Pegels unter einen Grenzwert werden die Einlassventile der ersten Radbremsengruppe geschlossen.

Dies hat den Vorteil, dass eine Lokalisierung der Leckage möglich wird bzw. weiterer Verlust von Druckmittel verhindert wird. Befindet sich die Leckage in einem nunmehr abgetrennten Bereich (z.B. Bremsleitung zwischen dem jeweiligen Einlassventil und der ersten Radbremsengruppe oder an einer Radbremse der ersten Radbremsengruppe selbst), so wird durch das Abtrennen ein weiterer Verlust verhindert und die Bremsanlage kann in dieser Konfiguration weiter unter Sicherstellung einer Bremswirkung betrieben werden.

Bevorzugt werden die Einlassventile lediglich der ersten Radbremsengruppe geschlossen, während die Einlassventile der zweiten Radbremsengruppe geöffnet bleiben.

Bevorzugt umfasst die Bremsanlage mindestens vier Radbremsen und die erste Radbremsengruppe umfasst eine erste und eine zweite Radbremse der Radbremsen.

Besonders bevorzugt umfasst die zweite Radbremsengruppe eine dritte und eine vierte Radbremse der mindestens vier Radbremsen.

Die Bremsanlage ist vorzugsweise in einer sog. "Brake-by-wire"-Betriebsart, in der die Radbremsen mittels Druckmittel aus der Druckbereitstellungseinrichtung betätigt werden, wobei der Hauptbremszylinder von den Radbremsen abgetrennt ist, sowohl vom Fahrzeugführer als auch unabhängig vom Fahrzeugführer ansteuerbar. Die Bremsanlage ist vorzugsweise auch in mindestens einer Rückfallbetriebsart betreibbar, in der die Radbremsen mittels Druckmittel aus dem Hauptbremszylinder betätigt werden.

Bevorzugt sind die erste und die zweite Radbremse an einer gemeinsamen Kraftfahrzeugachse oder an einer Kraftfahrzeugdiagonalen angeordnet. Somit sind die erste und die zweite Radbremse auf entgegengesetzten Fahrzeugseiten angeordnet. Dies hat den Vorteil, dass bei einem Abtrennen der ersten und der zweiten Radbremse durch die übrigen Radbremsen weiterhin Bremskraft auf beiden Fahrzeugseiten erzeugt wird.

Bevorzugt werden die Einlassventile der ersten Radbremsengruppe geöffnet und die Einlassventile der zweiten Radbremsengruppe geschlossen, wenn der Pegel unter einen zweiten Grenzwert fällt, welcher kleiner ist als der erste Grenzwert. Wie oben kann die Bremsanlage in dieser Konfiguration weiter unter Sicherstellung einer Bremswirkung betrieben werden, falls die Leckage sich in dem nunmehr abgetrennten Bereich befindet. Anderenfalls lässt ein weiteres Absinken des Pegels darauf schließen, dass die Leckage sich nicht in dem Bereich befindet, der durch das Schließen der Einlassventile der zweiten Radbremsengruppe abgetrennt wurde.

Gemäß einer bevorzugten Weiterbildung der Erfindung wird eine Diagnoseroutine zur Feststellung einer Leckage der Druckbereitstellungseinrichtung durchgeführt, wenn der Pegel unter einen dritten Grenzwert fällt, welcher kleiner ist als der zweite Grenzwert. Das weitere Absinken des Pegels lässt darauf schließen, dass sich die Leckage nicht in einem Bereich befindet, der durch das Schließen von Einlassventilen (der ersten bzw. zweiten Radbremsengruppe) abgetrennt wurde. Durch die Diagnoseroutine lässt sich dann eine mögliche Leckage im Bereich der Druckbereitstellungseinrichtung feststellen.

Bevorzugt ist der Hauptbremszylinder über ein Trennventil mit einer Bremsversorgungsleitung trennbar verbunden, an welche alle Radbremsen angeschlossen sind und welche über ein Zuschaltventil mit der Druckbereitstellungseinrichtung trennbar verbunden ist, wobei während der Diagnoseroutine die Einlassventile aller Radbremsen, das Trennventil und das Zuschaltventil geschlossen werden und Druck mittels der Druckbereitstellungseinrichtung aufgebaut wird. Hierdurch wird hydraulischer Druck im Druckraum der Druckbereitstellungseinrichtung sowie im Leitungsabschnitt zwischen der Druckbereitstellungseinrichtung und dem Zuschaltventil aufgebaut. Es kann nun festgestellt werden, ob ein weiterer Druckmittelverlust erfolgt, in welchem Fall die Leckage in der Druckbereitstellungseinrichtung lokalisiert ist.

Bevorzugt wird die Bremsanlage in einer ersten Rückfallbetriebsart betrieben, wenn die Diagnoseroutine ergibt, dass eine Leckage der Druckbereitstellungseinrichtung vorliegt, wobei in der ersten Rückfallbetriebsart die Druckbereitstellungseinrichtung von allen Radbremsen, insbesondere durch Schalten eines Zuschaltventils, getrennt ist und die Radbremsen mittels Druckmittel aus dem Hauptbremszylinder betätigt werden. Hierdurch wird ein weiterer Druckmittelverlust durch die Leckage in der Druckbereitstellungseinrichtung verhindert.

Besonders bevorzugt wird die Bremsanlage in einer zweiten Rückfallbetriebsart betrieben, wenn die Diagnoseroutine ergibt, dass keine Leckage der Druckbereitstellungseinrichtung vorliegt, wobei in der zweiten Rückfallbetriebsart die Radbremsen mittels Druckmittel aus der Druckbereitstellungseinrichtung betätigt werden und der Hauptbremszylinder von allen Radbremsen, insbesondere durch Schalten eines Trennventils, dauerhaft getrennt ist. Dies hat den Hintergrund, dass die Leckage per Ausschlussprinzip im Bereich des Hauptbremszylinders vorliegen muss, wenn sie weder im Bereich der ersten Radbremsengruppe, noch im Bereich der zweiten Radbremsengruppe, noch im Bereich der Druckbereitstellungseinrichtung lokalisiert ist. Durch das Abtrennen des Hauptbremszylinders wird also ein weiterer Druckmittelverlust verhindert. Die Bremsleistung wird durch die Druckmittelbereitstellungseinrichtung gewährleistet.

Besonders bevorzugt ist jede Radbremse über ein Auslassventil mit dem Druckmittelvorratsbehälter trennbar verbunden und alle Auslassventile werden während der zweiten Rückfallbetriebsart dauerhaft geschlossen. Dies verhindert einen weiteren Druckmittelverlust über die Leckage im Bereich des Hauptzylinders.

Bevorzugt ist die Vorrichtung zur Bestimmung eines Pegels derart ausgebildet, dass kontinuierliche Werte des Pegels bestimmt werden. Vorteilhafterweise wird dabei der Pegel von einem Sensor erfasst.

Alternativ ist die Vorrichtung zur Bestimmung eines Pegels bevorzugt derart ausgebildet, dass ein Absinken des Pegels unter einen vorgegebenen Wert oder eine Mehrzahl diskreter vorgegebener Werte festgestellt wird. Vorteilhafterweise umfasst die Vorrichtung zur Bestimmung eines Pegels mehrere Sensoren, die jeweils dazu ausgebildet sind, ein Absinken des Pegels unter einen bestimmten Messpunkt zu erfassen bzw. zu erfassen, ob sich an einem bestimmten Messpunkt Druckmittel befindet oder nicht. Solche Sensoren sind in der Regel kostengünstiger als Sensoren, die kontinuierlich einen Pegelstand erfassen.

Die Erfindung betrifft auch eine Bremsanlage, die einen mittels eines Bremspedals betätigbaren Hauptbremszylinder, eine elektrisch steuerbare Druckbereitstellungseinrichtung, einen, insbesondere unter Atmosphärendruck stehenden, Druckmittelvorratsbehälter, aus dem der Hauptbremszylinder und die Druckbereitstellungseinrichtung mit Druckmittel versorgt werden, mindestens zwei hydraulisch betätigbare Radbremsen, zumindest ein elektrisch betätigbares Einlassventil je Radbremse und ein Steuergerät, welches den Betrieb der Bremsanlage steuert, umfasst, wobei die Radbremsen wahlweise mit Druckmittel aus dem Hauptbremszylinder oder mit Druckmittel aus der Druckbereitstellungseinrichtung betätigbar sind, wobei der Druckmittelvorratsbehälter mit einer Vorrichtung zur Bestimmung eines Pegels des Druckmittels ausgestattet ist und das Steuergerät die Bremsanlage gemäß eines Verfahrens nach einem der Ansprüche 1 bis 10 ansteuert.

Bevorzugt ist der Hauptbremszylinder über ein Trennventil mit einer Bremsversorgungsleitung trennbar verbunden, an welche alle Radbremsen angeschlossen sind und welche über ein Zuschaltventil mit der Druckbereitstellungseinrichtung trennbar verbunden ist.

Bevorzugt umfasst der Hauptbremszylinder einen einzigen Druckraum, der mit den Radbremsen hydraulisch verbunden ist.

Weitere bevorzugte Ausführungsformen der Erfindung ergeben sich aus den Unteransprüchen und der nachfolgenden Beschreibung anhand von Figuren.

Es zeigen schematisch:
- Fig. 1: eine beispielgemäße Bremsanlage,
- Fig. 2: ein Ablaufschema eines beispielsgemäßen Verfahrens.

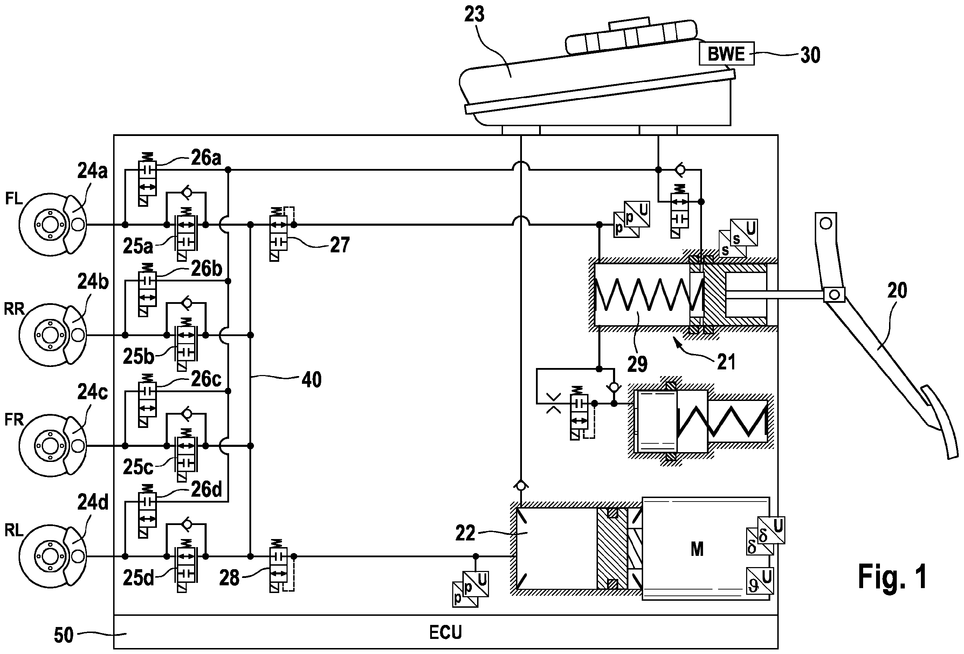

Figur 1 zeigt eine beispielgemäße Bremsanlage. Die Bremsanlage umfasst einen Hauptbremszylinder 21 mit mindestens einem Druckraum 29. Der Hauptbremszylinder wird über ein Bremspedal 20 betätigt und ist über mindestens ein Trennventil 27 mit den Radbremsen 24a, 24b, 24c, 24d verbunden. Vorteilhafterweise ist das Trennventil 27 stromlos offen ausgeführt. Jede Radbremse ist einzeln durch Schalten eines zugeordneten Einlassventils 25a, 25b, 25c, 25d hydraulisch abtrennbar.

Beispielsgemäß umfasst der Hauptbremszylinder 21 einen einzigen Druckraum 29, welcher über das Trennventil 27 mit einer Bremsversorgungsleitung 40 verbunden ist. An die Bremsversorgungsleitung 40 sind wiederum die Radbremsen 24a, 24b, 24c und 24d über jeweils das Einlassventil 25a, 25b, 25c, 25d angeschlossen. Die Radbremsen 24a, 24b, 24c, 24d sind über diese Verbindungen mittels Druckmittel aus dem Hauptbremszylinder 21 betätigbar.

Die Bremsanlage umfasst auch eine Druckbereitstellungseinrichtung 22, mittels derer die Radbremsen ebenfalls mit Druckmittel versorgt werden können. Hierzu ist die Druckbereitstellungseinrichtung 22 über zumindest ein Zuschaltventil 28 mit den Radbremsen 24a, 24b, 24c, 24d verbunden. Das Zuschaltventil 28 ist vorteilhafterweise stromlos geschlossen ausgeführt.

Beispielsgemäß ist die Druckbereitstellungseinrichtung 22 über das Zuschaltventil 28 ebenfalls mit der Bremsversorgungsleitung 40 verbunden, an die die Radbremsen angeschlossen sind.

Die Bremsanlage kann vorzugsweise in einer "by-wire"-Betriebsart betrieben werden, in der der Hauptbremszylinder 21 hydraulisch von den Radbremsen 24a, 24b, 24c, 24d getrennt ist und Bremsungen mittels Druckmittel aus der Druckbereitstellungseinrichtung 22 ausgeführt werden.

Die Bremsanlage umfasst einen Druckmittelvorratsbehälter 23, welcher mit einer Vorrichtung 30 zur Bestimmung eines Pegels des Druckmittels ausgestattet ist. Sowohl der Hauptbremszylinder 21 als auch die Druckbereitstellungseinrichtung 22 werden aus dem Druckmittelvorratsbehälter 23 mit Druckmittel versorgt. Der Druckmittelvorratsbehälter 23 steht vorteilhafterweise unter Atmosphärendruck.

Gemäß einem ersten Ausführungsbeispiel ist die Vorrichtung 30 zur Bestimmung eines Pegels derart ausgebildet, dass kontinuierliche Werte des Pegels p bestimmt werden. Dies geschieht beispielsweise mittels eines Sensors, welcher die Höhe des Füllstands misst.

Nach einem zweiten Ausführungsbeispiel ist die Vorrichtung 30 zur Bestimmung eines Pegels derart ausgebildet, dass ein Absinken des Pegels unter einen vorgegebenen Wert oder eine Mehrzahl diskreter vorgegebener Werte festgestellt wird. Dies kann zum Beispiel durch Hall-Sensoren oder durch einen Sensor mit einem bzw. mehreren sogenannten Reed-Kontakten umgesetzt werden, durch welche ein Absinken des Pegels unter den Ort des jeweiligen Reed-Kontakts festgestellt wird.

Die Radbremsen 24a, 24b, 24c, 24d sind beispielhafterweise über je ein Auslassventil 26a, 26b, 26c, 26d mit dem Druckmittelvorratsbehälter 23 trennbar verbunden.

Vorteilhafterweise wird die "by-wire"-Betriebsart im Normalbetrieb der Bremsanlage eingesetzt. Die Bremsanlage ist auch in einer ersten Rückfallbetriebsart betreibbar, in welcher die Druckbereitstellungseinrichtung 22 außer Betrieb genommen wird und Bremsdruck ausschließlich durch den Hauptbremszylinder 21 bereitgestellt wird. Die Bremsanlage ist auch in einer zweiten Rückfallbetriebsart betreibbar, in welcher der Hauptbremszylinder 21 ständig von den Radbremsen 24a, 24b, 24c, 24d abgetrennt wird und Bremsdruck ausschließlich von der Druckbereitstellungseinrichtung 22 bereitgestellt wird. Vorteilhafterweise ist der Druckmittelvorratsbehälter 23 in zwei Kammern unterteilt, welche durch eine Schottwand getrennt sind, so dass ein vollständiges Entleeren des Druckmittelvorratsbehälters 23 verhindert wird.

Bevorzugt werden in der ersten und/oder der zweiten Rückfallbetriebsart die Auslassventile 26a, 26b, 26c, 26d geschlossen.

Die Bremsanlage umfasst weiter ein Steuergerät 50, welches den Betrieb der Bremsanlage steuert.

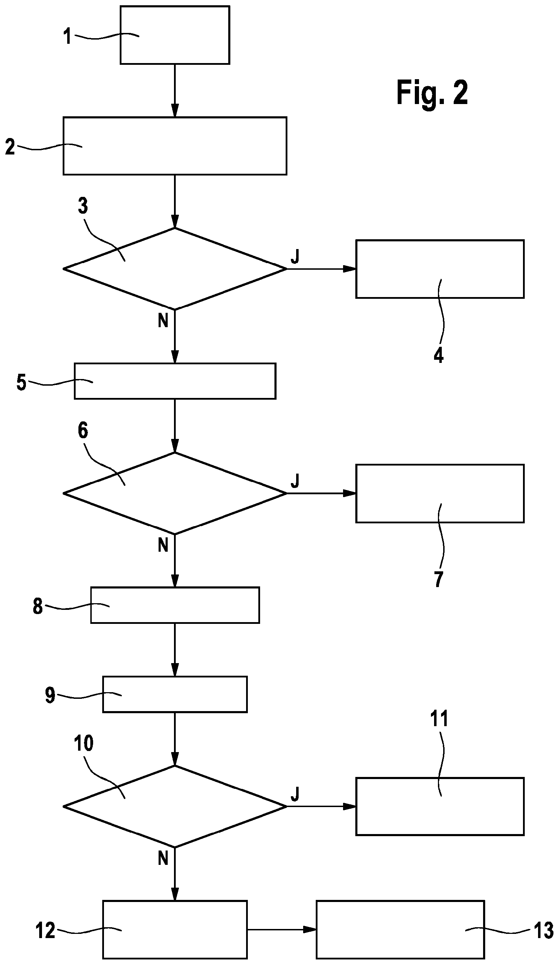

Figur 2 zeigt ein Ablaufschema eines beispielgemäßen Verfahrens. Das Verfahren soll anhand der beispielgemäßen Bremsanlage der Figur 1 näher erläutert werden. Das Verfahren beginnt in Block 1, wenn die Vorrichtung 30 zur Bestimmung eines Pegels des Druckmittels in dem Druckmittelvorratsbehälter 23 einen Pegel misst, welcher unterhalb eines ersten Grenzwerts s1 ist.

Gemäß einem ersten Ausführungsbeispiel ist die Vorrichtung 30 zur Bestimmung eines Pegels des Druckmittels dabei so ausgeführt, dass kontinuierlich ein Pegel p des Druckmittels durch einen Sensor gemessen wird. Der gemessene Wert p wird an das Steuergerät 50 übermittelt, welches den Wert mit dem ersten Grenzwert s1 vergleicht. Ist der gemessene Wert p kleiner als der erste Grenzwert s1, gilt ein Abfallen des Pegels unter den ersten Grenzwert s1 als festgestellt und das Verfahren wird mit Block 2 fortgesetzt.

Gemäß einem zweiten Ausführungsbeispiel ist die Vorrichtung 30 zur Bestimmung eines Pegels des Druckmittels derart ausgebildet, dass ein Absinken des Pegels unter einen vorgegebenen Wert oder eine Mehrzahl diskreter vorgegebener Werte festgestellt wird. Vorteilhafterweise umfasst die Vorrichtung zur Bestimmung eines Pegels mindestens einen ersten Sensor, welcher dazu ausgebildet ist, zu erkennen, ob sich an einem bestimmten ersten Messpunkt Druckmittel befindet. Der Sensor übermittelt vorzugsweise den erkannten Status (Druckmittel/kein Druckmittel am Messpunkt) an das Steuergerät 50. Alternativ übermittelt der Sensor nur ein erkanntes Fehlen von Druckmittel an das Steuergerät 50. Vorteilhafterweise wird das Signal des Sensors von dem Steuergerät 50 entprellt, um eine Fehlerkennung durch schwappendes Druckmittel zu verhindern. Wird durch den ersten Sensor festgestellt, dass sich kein Druckmittel an dem ersten Messpunkt befindet, so gilt ein Abfallen des Pegels unter den ersten Grenzwert s1, welcher der Höhe des Messpunkts entspricht, als festgestellt und das Verfahren wird mit Block 2 fortgesetzt.

In Block 2 des Verfahrens wird der Fahrer gewarnt, dass ein Druckmittelverlust festgestellt wurde. Zudem werden die Einlassventile einer ersten und einer zweiten Radbremse der Radbremsen geschlossen. Die erste und zweite Radbremse sind dabei vorteilhafterweise an gegenüberliegenden Fahrzeugseiten angeordnet, beispielsweise auf einer Fahrzeugdiagonalen oder auf einer Fahrzeugachse.

Die Einlassventile der dritten und vierten Radbremse bleiben vorteilhafterweise geöffnet.

Beispielhafterweise werden das Einlassventil 25c der vorderen rechten (FR) Radbremse 24c sowie das Einlassventil 25d der hinteren linken (RL) Radbremse 24d geschlossen. Die Einlassventile der 25a, 25b der vorderen linken (FL) und hinteren rechten (RR) Radbremse 24a, 24b bleiben geöffnet.

In einer bevorzugten Ausführungsform der Erfindung werden in Block 2 die Auslassventile 26a, 26b, 26c, 26d aller Radbremsen ebenfalls geschlossen, wodurch die Rücklaufleitungen abgetrennt werden.

Das Verfahren wird mit Block 3 fortgeführt. Die weitere Entwicklung des Pegels des Druckmittels wird überwacht. Falls ein kontinuierlich gemessener Pegel p an das Steuergerät 50 übermittelt wird, so wird der gemessene Pegel p mit einem zweiten Grenzwert s2 verglichen. Anderenfalls umfasst die Vorrichtung zur Bestimmung eines Pegels mindestens einen zweiten Sensor, welcher dazu ausgebildet ist, zu erkennen, ob sich an einem bestimmten zweiten Messpunkt Druckmittel befindet. Die Höhe des zweiten Messpunkt im Druckmittelvorratsbehälter entspricht einem zweiten Grenzwert s2. Der zweite Grenzwert s2 ist in jedem Fall kleiner als der erste Grenzwert s1. Fällt der gemessene Pegel p unter den zweiten Grenzwert s2 oder wird ein Fehlen von Druckmittel am zweiten Messpunkt festgestellt, so wird mit Block 5 fortgefahren. Bleibt hingegen der gemessene Pegel p, insbesondere während einer vorgegebenen ersten Zeitspanne T1, oberhalb des zweiten Grenzwerts s2 bzw. befindet sich weiterhin, insbesondere während einer vorgegebenen ersten Zeitspanne T1, am zweiten Messpunkt Bremsflüssigkeit, so wird mit Block 4 fortgefahren.

In Block 4 gilt die Leckage als lokalisiert im Bereich der ersten oder zweiten Radbremse. Die Bremsanlage wird weiterhin mit geschlossenem erstem und zweitem Einlassventil 25c, 25d betrieben, vorteilhafterweise bis eine Reparatur der Leckage bzw. eine Instandsetzung der Bremsanlage vorgenommen wird.

Unter dem Bereich einer Radbremse wird dabei vorteilhafterweise die Radbremse selbst, sowie hydraulische Leitungen zwischen dem Einlassventil der Radbremse und der Radbremse und hydraulische Leitungen zwischen der Radbremse und dem Auslassventil der Radbremse verstanden. Ebenso können Abschnitte, welche mit der Radbremse hydraulisch verbunden und nicht durch das Einlassventil oder Auslassventil von der Radbremse abtrennbar sind, dem Bereich der Radbremse zugerechnet werden.

In Block 5 werden die Einlassventile der ersten und der zweiten Radbremse geöffnet und die Einlassventile der dritten und der vierten Radbremse der Radbremsen geschlossen. Das Verfahren wird mit Block 6 fortgesetzt.

Beispielhafterweise werden das Einlassventil 25a der vorderen linken (FL) Radbremse 24a sowie das Einlassventil 25b der hinteren rechten (RR) Radbremse 24b geschlossen. Die Einlassventile der 25c, 25d der vorderen rechten (FR) und hinteren linken (RL) Radbremse 24c, 24d bleiben geöffnet.

In Block 6 wird analog zu Block 3 das Fallen des Pegels unter einen dritten Grenzwert s3 (bzw. unter einen dritten Messpunkt) überwacht. Fällt der Pegel unter den dritten Grenzwert s3, so wird mit Block 8 fortgefahren, anderenfalls gilt in Block 7 die Leckage als lokalisiert im Bereich der dritten oder vierten Radbremse. Die Bremsanlage wird weiterhin mit geschlossenen Einlassventilen der dritten und vierten Radbremse betrieben, vorteilhafterweise bis eine Reparatur der Leckage bzw. eine Instandsetzung der Bremsanlage vorgenommen wird.

In Block 8 gilt als festgestellt, dass sich die Leckage weder im Bereich der ersten und zweiten Radbremse (24c, 24d), noch im Bereich der dritten und vierten Radbremse (24a, 24b) befindet. Daraus wird geschlossen, dass sich die Leckage im Bereich des Hauptbremszylinders 21 oder im Bereich der Druckbereitstellungseinrichtung 22 befinden muss.

Anschließend wird in Block 8 eine Diagnoseroutine durchgeführt. Während der Diagnoseroutine werden die Einlassventile 24a, 24b, 24c, 24d aller Radbremsen, das Trennventil 27 und das Zuschaltventil 28 geschlossen und Druck mittels der Druckbereitstellungseinrichtung 22 aufgebaut. Durch diese Diagnoseroutine kann eine Leckage im Bereich der Druckbereitstellungseinrichtung 22 und in der Bremsleitung zwischen der Druckbereitstellungseinrichtung 22 und dem Zuschaltventil 28 erkannt werden.

In Block 10 wird abhängig vom Ergebnis der Diagnoseroutine das weitere Vorgehen entschieden. Wurde auf eine Leckage im Bereich der Druckbereitstellungseinrichtung 22 geschlossen, so wird mit Block 11 fortgefahren, ansonsten mit Block 12. In Block 11 wird in eine sogenannte stromlose Rückfallbetriebsart übergegangen. Dabei wird die Bremsanlage in einer ersten Rückfallbetriebsart betrieben, bei der die Druckbereitstellungseinrichtung 22 von allen Radbremsen 24a, 24b, 24c, 24d getrennt ist und die Radbremsen 24a, 24b, 24c, 24d mittels Druckmittel aus dem Hauptbremszylinder 21 betätigt werden. Die Abtrennung von den Radbremsen erfolgt vorteilhafterweise durch Schließen des Zuschaltventils 28.

In Block 12 wird per Ausschlussprinzip angenommen, dass sich die Leckage im Bereich des Hauptbremszylinders 21 befindet. Das Verfahren wird mit Block 12 fortgesetzt, worin die Bremsanlage in einer zweiten Rückfallbetriebsart betrieben wird, in der die Radbremsen 24a, 24b, 24c, 24d mittels Druckmittel aus der Druckbereitstellungseinrichtung 22 betätigt werden und der Hauptbremszylinder 21 von allen Radbremsen 24a, 24b, 24c, 24d dauerhaft getrennt ist. Die Auslassventile 26a, 26b, 26c, 26d werden in der zweiten Rückfallbetriebsart nicht geöffnet. Das Abtrennen erfolgt vorzugsweise durch Schließen des Trennventils 27.

Im Folgenden wird ein weiteres beispielgemäßes Verfahren beschrieben.

Es wird eine mehrstufige Vorrichtung zur Bestimmung eines Pegels des Druckmittels in dem Druckmittelvorratsbehälter (Behälterwarneinrichtung) verwendet oder eine Vorrichtung zur stufenlosen Messung des Flüssigkeitsstands in dem Druckmittelvorratsbehälter. Beim ersten Ansprechen der Behälterwarneinrichtung wird der Fahrer rot bewarnt, und die Einlassventile einer Diagonale oder einer Achse werden permanent geschlossen.

Wenn der Flüssigkeitsspiegel im Behälter nicht weiter absinkt, ist die Leckage hinreichend lokalisiert und entschärft. Anderenfalls werden die beiden geschlossenen Einlassventile geöffnet und die beiden anderen Einlassventile geschlossen.

Wenn der Flüssigkeitsspiegel im Behälter noch weiter absinkt, muss die äußere Leckage im Hauptzylinder oder der Druckbereitstellungseinrichtung (Linearaktuator) bestehen, weil mit einem Doppelfehler nicht zu rechnen ist. Durch eine Diagnoseroutine, bei der das Trennventil (Fahrertrennventil), das Zuschaltventil und die Einlassventile geschlossen werden und Druck im Linearaktuator aufgebaut wird, kann entschieden werden, ob eine Leckage im Linearaktuator vorliegt.

Wenn das der Fall ist, geht das System in eine stromlose Rückfallebene über. Andernfalls muss die Leckage im Hauptzylinder liegen, und das System bleibt in der "By-wire"- Betriebsart, in der Druckmittel für die Radbremsen durch den Linearaktuator bereit gestellt wird. Dabei dürfen allerdings die Auslassventile nicht mehr geöffnet werden, um eine Verschiebung von Bremsflüssigkeit aus der Behälterkammer des Linearaktuators in die des Hauptzylinders zu vermeiden.

## Patentansprüche

1. Verfahren zum Betreiben einer Bremsanlage für Kraftfahrzeuge, die einen mittels eines Bremspedals (20) betätigbaren Hauptbremszylinder (21), eine elektrisch steuerbare Druckbereitstellungseinrichtung (22), einen, insbesondere unter Atmosphärendruck stehenden, Druckmittelvorratsbehälter (23), aus dem der Hauptbremszylinder (21) und die Druckbereitstellungseinrichtung (22) mit Druckmittel versorgt werden, sowie mindestens zwei hydraulisch betätigbare Radbremsen (24a, 24b, 24c, 24d) und zumindest ein elektrisch betätigbares Einlassventil (25a, 25b, 25c, 25d) je Radbremse umfasst, wobei die Radbremsen (24a, 24b, 24c, 24d) wahlweise mittels Hauptbremszylinder (21) oder mittels Druckbereitstellungseinrichtung (22) betätigbar sind, wobei der Druckmittelvorratsbehälter (23) mit einer Vorrichtung (30) zur Bestimmung eines Pegels des Druckmittels überwacht wird, wobei die Radbremsen in mindestens eine erste Radbremsengruppe und eine zweite Radbremsengruppe eingeteilt werden, und **dadurch gekennzeichnet, dass** die Einlassventile (25c, 25d) der ersten Radbremsengruppe (24c, 24d) geschlossen werden, wenn der bestimmte Pegel unter einen ersten Grenzwert (s1) fällt.

2. Verfahren nach Anspruch 1, **dadurch gekennzeichnet, dass** die Bremsanlage mindestens vier Radbremsen umfasst und die erste Radbremsengruppe eine erste und eine zweite Radbremse der Radbremsen umfasst.

3. Verfahren nach Anspruch 2, **dadurch gekennzeichnet, dass** die zweite Radbremsengruppe eine dritte und eine vierte Radbremse der Radbremsen umfasst.

4. Verfahren nach Anspruch 2 oder 3, **dadurch gekennzeichnet, dass** die erste und die zweite Radbremse auf entgegengesetzten Fahrzeugseiten angeordnet sind.

5. Verfahren nach einem der vorhergehenden Ansprüche, **dadurch gekennzeichnet, dass** die Einlassventile (25c, 25d) der ersten Radbremsengruppe (24c, 24d) geöffnet werden und die Einlassventile (25a, 25b) der zweiten Radbremsengruppe (24a, 24b) der Radbremsen geschlossen werden, wenn der Pegel unter einen zweiten Grenzwert (s2) fällt, welcher kleiner ist als der erste Grenzwert (s1).

6. Verfahren nach Anspruch 4 oder 5, **dadurch gekennzeichnet, dass** eine Diagnoseroutine zur Feststellung einer Leckage der Druckbereitstellungseinrichtung (22) durchgeführt wird, wenn der Pegel unter einen dritten Grenzwert (s3) fällt, welcher kleiner ist als der zweite Grenzwert (s2).

7. Verfahren nach Anspruch 6, **dadurch gekennzeichnet, dass** der Hauptbremszylinder (21) über ein Trennventil (27) mit einer Bremsversorgungsleitung (40) trennbar verbunden ist, an welche alle Radbremsen (24a, 24b, 24c, 24d) angeschlossen sind und welche über ein Zuschaltventil (28) mit der Druckbereitstellungseinrichtung (22) trennbar verbunden ist, wobei während der Diagnoseroutine die Einlassventile (25a, 25b, 25c, 25d) aller Radbremsen, das Trennventil (27) und das Zuschaltventil (28) geschlossen werden und Druck mittels der Druckbereitstellungseinrichtung (22) aufgebaut wird.

8. Verfahren nach einem der Ansprüche 6 oder 7, **dadurch gekennzeichnet, dass** die Bremsanlage in einer ersten Rückfallbetriebsart betrieben wird, wenn die Diagnoseroutine ergibt, dass eine Leckage der Druckbereitstellungseinrichtung (22) vorliegt, wobei in der ersten Rückfallbetriebsart die Druckbereitstellungseinrichtung (22) von den Radbremsen (24a, 24b, 24c, 24d), insbesondere durch Schalten eines Zuschaltventils (28), getrennt ist und die Radbremsen (24a, 24b, 24c, 24d) mittels Druckmittel aus dem Hauptbremszylinder (21) betätigt werden.

9. Verfahren nach einem der Ansprüche 6 bis 8, **dadurch gekennzeichnet, dass** die Bremsanlage in einer zweiten Rückfallbetriebsart betrieben wird, wenn die Diagnoseroutine ergibt, dass keine Leckage der Druckbereitstellungseinrichtung (22) vorliegt, wobei in der zweiten Rückfallbetriebsart die Radbremsen (24a, 24b, 24c, 24d) mittels Druckmittel aus der Druckbereitstellungseinrichtung (22) betätigt werden und der Hauptbremszylinder (21) von den Radbremsen (24a, 24b, 24c, 24d), insbesondere durch Schalten eines Trennventils (27), dauerhaft getrennt ist.

10. Verfahren nach Anspruch 9, **dadurch gekennzeichnet, dass** jede Radbremse über ein Auslassventil (26a, 26b, 26c, 26d) mit dem Druckmittelvorratsbehälter (30) trennbar verbunden ist und dass während der zweiten Rückfallbetriebsart alle Auslassventile (26a, 26b, 26c, 26d) dauerhaft geschlossen werden.

11. Verfahren nach einem der vorhergehenden Ansprüche, **dadurch gekennzeichnet, dass** die Vorrichtung (30) zur Bestimmung eines Pegels derart ausgebildet ist, dass kontinuierliche Werte (p) des Pegels bestimmt werden.

12. Verfahren nach einem der Ansprüche 1 bis 9, **dadurch gekennzeichnet, dass** die Vorrichtung (30) zur Bestimmung eines Pegels derart ausgebildet ist, dass ein Absinken des Pegels unter einen vorgegebenen Wert oder eine Mehrzahl diskreter vorgegebener Werte festgestellt wird.

13. Bremsanlage, die einen mittels eines Bremspedals (20) betätigbaren Hauptbremszylinder (21), eine elektrisch steuerbare Druckbereitstellungseinrichtung (22), einen, insbesondere unter Atmosphärendruck stehenden, Druckmittelvorratsbehälter (23), aus dem der Hauptbremszylinder (21) und die Druckbereitstellungseinrichtung (22) mit Druckmittel versorgt werden, mindestens zwei hydraulisch betätigbare Radbremsen (24a, 24b, 24c, 24d), zumindest ein elektrisch betätigbares Einlassventil (25a, 25b, 25c, 26d) je Radbremse und ein Steuergerät (50), welches den Betrieb der Bremsanlage steuert, umfasst, wobei die Radbremsen (24a, 24b, 24c, 24d) wahlweise mit Druckmittel aus dem Hauptbremszylinder (21) oder mit Druckmittel aus der Druckbereitstellungseinrichtung (22) betätigbar sind, wobei der Druckmittelvorratsbehälter (23) mit einer Vorrichtung (30) zur Bestimmung eines Pegels des Druckmittels ausgestattet ist, **dadurch gekennzeichnet, dass** die Einlassventile (25c, 25d) einer ersten Radbremsengruppe (24c, 24d) der Radbremsen geschlossen werden, wenn der bestimmte Pegel unter einen ersten Grenzwert (s1) fällt.

14. Bremsanlage nach Anspruch 13, **dadurch gekennzeichnet, dass** das Steuergerät (50) die Bremsanlage gemäß eines Verfahrens nach einem der Ansprüche 2 bis 12 ansteuert.

15. Bremsanlage nach Anspruch 13, **dadurch gekennzeichnet, dass** der Hauptbremszylinder (21) über ein Trennventil (27) mit einer Bremsversorgungsleitung (40) trennbar verbunden ist, an welche alle Radbremsen (24a, 24b, 24c, 24d) angeschlossen sind und welche über ein Zuschaltventil (28) mit der Druckbereitstellungseinrichtung (22) trennbar verbunden ist.

16. Bremsanlage nach Anspruch 15, **dadurch gekennzeichnet, dass** das Steuergerät (50) die Bremsanlage gemäß eines Verfahrens nach einem der Ansprüche 2 bis 4 ansteuert.

17. Bremsanlage nach einem der Ansprüche 13 bis 16, **dadurch gekennzeichnet, dass** der Hauptbremszylinder (21) einen einzigen Druckraum (29) umfasst, der mit den Radbremsen (24a, 24b, 24c, 24d) hydraulisch verbunden ist.

## Claims

1. Method for operating a brake system for motor vehicles, which comprises a master brake cylinder (21) actuable by means of a brake pedal (20), an electrically controllable pressure provision device (22), a pressure medium reservoir tank (23), which is in particular under atmospheric pressure and from which the master brake cylinder (21) and the pressure provision device (22) are supplied with pressure medium, and at least two hydraulically actuable wheel brakes (24a, 24b, 24c, 24d) and at least one electrically actuable inlet valve (25a, 25b, 25c, 25d) per wheel brake, wherein the wheel brakes (24a, 24b, 24c, 24d) are actuable either by means of the master brake cylinder (21) or by means of the pressure provision device (22), wherein the pressure medium reservoir tank (23) is monitored by a device (30) for determining a level of the pressure medium, wherein the wheel brakes are divided into at least one first wheel brake group and one second wheel brake group, and **characterized in that** the inlet valves (25c, 25d) of the first wheel brake group (24c, 24d) are closed when the determined level falls below a first limit value (s1).

2. Method according to Claim 1, **characterized in that** the brake system comprises at least four wheel brakes and the first wheel brake group comprises a first and a second wheel brake of the wheel brakes.

3. Method according to Claim 2, **characterized in that** the second wheel brake group comprises a third and a fourth wheel brake of the wheel brakes.

4. Method according to Claim 2 or 3, **characterized in that** the first and the second wheel brake are arranged on opposite sides of the vehicle.

5. Method according to one of the preceding claims, **characterized in that** the inlet valves (25c, 25d) of the first wheel brake group (24c, 24d) are opened and the inlet valves (25a, 25b) of the second wheel brake group (24a, 24b) of the wheel brakes are closed when the level falls below a second limit value (s2), which is lower than the first limit value (s1).

6. Method according to Claim 4 or 5, **characterized in that** a diagnostic routine for determining a leak in the pressure provision device (22) is carried out when the level falls below a third limit value (s3), which is lower than the second limit value (s2).

7. Method according to Claim 6, **characterized in that** the master brake cylinder (21) is separably connected via an isolating valve (27) to a brake supply line (40) to which all the wheel brakes (24a, 24b, 24c, 24d) are connected and which is separably connected via an activation valve (28) to the pressure provision device (22), wherein the inlet valves (25a, 25b, 25c, 25d) of all wheel brakes, the isolating valve (27) and the activation valve (28) are closed during the diagnostic routine and pressure is built up by means of the pressure provision device (22).

8. Method according to either of Claims 6 and 7, **characterized in that** the brake system is operated in a first fallback operating mode if the diagnostic routine shows that there is a leak in the pressure provision device (22), wherein, in the first fallback operating mode, the pressure provision device (22) is separated from the wheel brakes (24a, 24b, 24c, 24d), in particular by switching an activation valve (28), and the wheel brakes (24a, 24b, 24c, 24d) are actuated by means of pressure medium from the master brake cylinder (21).

9. Method according to one of Claims 6 to 8, **characterized in that** the brake system is operated in a second fallback operating mode if the diagnostic routine shows that there is no leak in the pressure provision device (22), wherein, in the second fallback operating mode, the wheel brakes (24a, 24b, 24c, 24d) are actuated by means of pressure medium from the pressure provision device (22), and the master brake cylinder (21) is permanently separated from the wheel brakes (24a, 24b, 24c, 24d), in particular by switching an isolating valve (27).

10. Method according to Claim 9, **characterized in that** each wheel brake is separably connected to the pressure medium reservoir tank (30) via an outlet valve (26a, 26b, 26c, 26d), and **in that** all the outlet valves (26a, 26b, 26c, 26d) are permanently closed during the second fallback operating mode.

11. Method according to one of the preceding claims, **characterized in that** the device (30) for determining a level is designed such that continuous values (p) of the level are determined.

12. Method according to one of Claims 1 to 9, **characterized in that** the device (30) for determining a level is designed such that a drop in the level below a predetermined value or a plurality of discrete predetermined values is determined.

13. Brake system which comprises a master brake cylinder (21) actuable by means of a brake pedal (20), an electrically controllable pressure provision device (22), a pressure medium reservoir tank (23), which is in particular under atmospheric pressure and from which the master brake cylinder (21) and the pressure provision device (22) are supplied with pressure medium, at least two hydraulically actuable wheel brakes (24a, 24b, 24c, 24d), at least one electrically actuable inlet valve (25a, 25b, 25c, 25d) per wheel brake, and a control unit (50) which controls the operation of the brake system, wherein the wheel brakes (24a, 24b, 24c, 24d) are actuable either with pressure medium from the master brake cylinder (21) or with pressure medium from the pressure provision device (22), wherein the pressure medium reservoir tank (23) is equipped with a device (30) for determining a level of the pressure medium, **characterized in that** the inlet valves (25c, 25d) of a first wheel brake group (24c, 24d) of the wheel brakes are closed when the determined level falls below a first limit value (s1).

14. Brake system according to Claim 13, **characterized in that** the control unit (50) activates the brake system in accordance with a method according to one of Claims 2 to 12.

15. Brake system according to Claim 13, **characterized in that** the master brake cylinder (21) is separably connected via an isolating valve (27) to a brake supply line (40), to which all the wheel brakes (24a, 24b, 24c, 24d) are connected and which is separably connected via an activation valve (28) to the pressure provision device (22).

16. Brake system according to Claim 15, **characterized in that** the control unit (50) activates the brake system in accordance with a method according to one of Claims 2 to 4.

17. Brake system according to one of Claims 13 to 16, **characterized in that** the master brake cylinder (21) comprises a single pressure chamber (29) which is hydraulically connected to the wheel brakes (24a, 24b, 24c, 24d).

## Revendications

1. Procédé d'exploitation d'une unité de freinage pour véhicules automobiles, qui comprend un cylindre de frein principal (21) actionnable au moyen d'une pédale de frein (20), un appareil de génération de pression électriquement commandable (22), un réservoir de fluide sous pression (23), se trouvant notamment sous pression atmosphérique, à partir duquel le cylindre de frein principal (21) et l'appareil de génération de pression (22) sont alimentés en fluide sous pression, ainsi qu'au moins deux freins sur roue hydrauliquement actionnables (24a, 24b, 24c, 24d) et au moins une soupape d'admission électriquement actionnable (25a, 25b, 25c, 25d) par frein sur roue, les freins sur roue (24a, 24b, 24c, 24d) étant actionnables au choix au moyen du cylindre de frein principal (21) ou au moyen de l'appareil de génération de pression (22), le réservoir de fluide sous pression (23) étant surveillé avec un dispositif (30) pour la détermination d'un niveau du fluide sous pression, dans lequel les freins sur roue sont divisés en au moins un premier groupe de freins sur roue et un deuxième groupe de freins sur roue, et **caractérisé en ce que** les soupapes d'admission (25c, 25d) du premier groupe de freins sur roue (24c, 24d) sont fermées lorsque le niveau déterminé chute en dessous d'une première valeur de seuil (s1).

2. Procédé selon la revendication 1, **caractérisé en ce que** l'unité de freinage comprend au moins quatre freins sur roue et le premier groupe de freins sur roue comprend un premier et un deuxième frein sur roue des freins sur roue.

3. Procédé selon la revendication 2, **caractérisé en ce que** le deuxième groupe de freins sur roue comprend un troisième et un quatrième frein sur roue des freins sur roue.

4. Procédé selon la revendication 2 ou 3, **caractérisé en ce que** le premier et le deuxième frein sur roue sont agencés sur des côtés opposés du véhicule.

5. Procédé selon l'une quelconque des revendications précédentes, **caractérisé en ce que** les soupapes d'admission (25c, 25d) du premier groupe de freins sur roue (24c, 24d) sont ouvertes et les soupapes d'admission (25a, 25b) du deuxième groupe de freins sur roue (24a, 24b) des freins sur roue sont fermées lorsque le niveau chute en dessous d'une deuxième valeur de seuil (s2) qui est inférieure à la première valeur de seuil (s1).

6. Procédé selon la revendication 4 ou 5, **caractérisé en ce qu'une** routine de diagnostic pour la détection d'une fuite de l'appareil de génération de pression (22) est réalisée lorsque le niveau chute en dessous d'une troisième valeur de seuil (s3) qui est inférieure à la deuxième valeur de seuil (s2).

7. Procédé selon la revendication 6, **caractérisé en ce que** le cylindre de frein principal (21) est relié de manière séparable par le biais d'une soupape de séparation (27) à une conduite d'alimentation de frein (40), à laquelle tous les freins sur roue (24a, 24b, 24c, 24d) sont raccordés et qui est reliée de manière séparable par l'intermédiaire d'une soupape de mise en circuit (28) à l'appareil de génération de pression (22) ; pendant la routine de diagnostic, les soupapes d'admission (25a, 25b, 25c, 25d) de tous les freins sur roue, la soupape de séparation (27) et la soupape de mise en circuit (28) étant fermées et la pression étant établie au moyen de l'appareil de génération de pression (22).

8. Procédé selon l'une quelconque des revendications 6 ou 7, **caractérisé en ce que** l'unité de freinage est exploitée dans un premier mode de secours lorsque la routine de diagnostic indique qu'une fuite de l'appareil de génération de pression (22) est présente ; dans le premier mode de secours, l'appareil de génération de pression (22) étant séparé des freins sur roue (24a, 24b, 24c, 24d), notamment par commutation d'une soupape de mise en circuit (28), et les freins sur roue (24a, 24b, 24c, 24d) étant actionnés au moyen de fluide sous pression issu du cylindre de frein principal (21).

9. Procédé selon l'une quelconque des revendications 6 à 8, **caractérisé en ce que** l'unité de freinage est exploité dans un deuxième mode de secours lorsque la routine de diagnostic indique qu'aucune fuite de l'appareil de génération de pression (22) n'est présente ; dans le deuxième mode de secours, les freins sur roue (24a, 24b, 24c, 24d) étant actionnés au moyen de fluide sous pression issu de l'appareil de génération de pression (22) et le cylindre de frein principal (21) étant séparé de manière permanente des freins sur roue (24a, 24b, 24c, 24d), notamment par commutation d'une soupape de séparation (27).

10. Procédé selon la revendication 9, **caractérisé en ce que** chaque frein sur roue est relié de manière séparable au réservoir de fluide sous pression (30) par l'intermédiaire d'une soupape de sortie (26a, 26b, 26c, 26d), et **en ce que** pendant le deuxième mode de secours, toutes les soupapes de sortie (26a, 26b, 26c, 26d) sont fermées de manière permanente.

11. Procédé selon l'une quelconque des revendications précédentes, **caractérisé en ce que** le dispositif (30) pour la détermination d'un niveau est configuré de telle sorte que des valeurs continues (p) du niveau sont déterminées.

12. Procédé selon l'une quelconque des revendications 1 à 9, **caractérisé en ce que** le dispositif (30) pour la détermination d'un niveau est configuré de telle sorte qu'une baisse du niveau en dessous d'une valeur prédéterminée ou d'une pluralité de valeurs prédéterminées discrètes est détectée.

13. Unité de freinage, qui comprend un cylindre de frein principal (21) actionnable au moyen d'une pédale de frein (20), un appareil de génération de pression électriquement commandable (22), un réservoir de fluide sous pression (23), se trouvant notamment sous pression atmosphérique, à partir duquel le cylindre de frein principal (21) et l'appareil de génération de pression (22) sont alimentés en fluide sous pression, au moins deux freins sur roue hydrauliquement actionnables (24a, 24b, 24c, 24d), au moins une soupape d'admission électriquement actionnable (25a, 25b, 25c, 25d) par frein sur roue, et un appareil de commande (50), qui commande l'exploitation de l'unité de freinage, les freins sur roue (24a, 24b, 24c, 24d) étant actionnables au choix avec du fluide sous pression issu du cylindre de frein principal (21) ou avec du fluide sous pression issu de l'appareil de génération de pression (22), le réservoir de fluide sous pression (23) étant équipé d'un dispositif (30) pour la détermination d'un niveau du fluide sous pression, **caractérisée en ce que** les soupapes d'admission (25c, 25d) d'un premier groupe de freins sur roue (24c, 24d) des freins sur roue sont fermées lorsque le niveau déterminé chute en dessous d'une première valeur de seuil (s1).

14. Unité de freinage selon la revendication 13, **caractérisée en ce que** l'appareil de commande (50) commande l'unité de freinage conformément à un procédé selon l'une quelconque des revendications 2 à 12.

15. Unité de freinage selon la revendication 13, **caractérisée en ce que** le cylindre de frein principal (21) est relié de manière séparable par l'intermédiaire d'une soupape de séparation (27) à une conduite d'alimentation de frein (40), à laquelle tous les freins sur roue (24a, 24b, 24c, 24d) sont raccordés et qui est reliée de manière séparable par l'intermédiaire d'une soupape de mise en circuit (28) à l'appareil de génération de pression (22).

16. Unité de freinage selon la revendication 15, **caractérisée en ce que** l'appareil de commande (50) commande l'unité de freinage conformément à un procédé selon l'une quelconque des revendications 2 à 4.

17. Unité de freinage selon l'une quelconque des revendications 13 à 16, **caractérisée en ce que** le cylindre de frein principal (21) comprend une chambre de pression unique (29), qui est reliée hydrauliquement aux freins sur roue (24a, 24b, 24c, 24d).
